**Europäisches Patentamt**

(19) **European Patent Office**

**Office européen des brevets**

(11) Numéro de publication: **0 018 303**
**B1**

(12) # FASCICULE DE BREVET EUROPEEN

(45) Date de publication du fascicule du brevet:
08.09.82

(51) Int. Cl.³: **A 01 G 9/10**

(21) Numéro de dépôt: **80430007.7**

(22) Date de dépôt: **04.03.80**

(54) **Dispositif d'enveloppement amovible pour culture tubulaire de végétaux.**

(30) Priorité: **19.04.79 FR 7910576**

(43) Date de publication de la demande:
**29.10.80 Bulletin 80/22**

(45) Mention de la délivrance du brevet:
**08.09.82 Bulletin 82/36**

(84) Etats contractants désignés:
**AT BE CH DE GB IT LU NL SE**

(56) Documents cités:
**FR-A-888 854**
**FR-A-1 342 476**
**US-A-3 158 957**
**US-A-4 043 077**
**US-A-4 142 324**

(73) Titulaire: **Ferrand, Claude, 263 Chemin de Bellet,
F-06200 Nice (FR)**

(72) Inventeur: **Ferrand, Claude, 263 Chemin de Bellet,
F-06200 Nice (FR)**

(74) Mandataire: **Roman, Alphonse, 35 Rue Paradis,
F-13001 Marseille (FR)**

ACTORUM AG

Dispositif d'enveloppement amovible pour culture tubulaire de végétaux

L'objet de l'invention concerne un dispositif d'enveloppement amovible pour culture tubulaire de végétaux.

Il est destiné à permettre l'extraction du végétal avec son enracinement, sa motte terreuse, son conditionnement pour son transport et sa transplantation.

Dans la culture tubulaire on est dans l'obligation d'utiliser une enveloppe en résine synthétique présentant une résistance pour permettre son remplissage par de la terre, le développement des racines et l'arrosage de l'ensemble, cet élément tubulaire est ensuite perdu malgré son prix de revient relativement élevé.

On connaît des dispositifs de garniture de pots tels que les Brevets USA N° 3 158 957 (Serre) et 4 043 077 Stonehocker qui sont destinées soit à isoler et imperméabiliser les parois du pot soit à réaliser une enveloppe extensible mais leur fonction n'a rien à voir avec la préservation de la motte et la conservation du pot après enlèvement de la culture.

Le dispositif suivant l'invention permet de conserver pour un usage indéfini, l'élément tubulaire résistant pour l'élevage du végétal, tout en permettant l'extraction du produit avec sa racine et sa motte de terreau avec les mêmes avantages que s'il était conservé dans son élément d'origine.

Il est constitué par le revêtement de la paroi intérieure de l'élément tubulaire par un film de résine synthétique qui épouse la forme de la paroi et la conserve après son extraction.

Sur les dessins annexés, donnés à titre d'exemple non limitatif d'une des formes de réalisation de l'objet de l'invention:

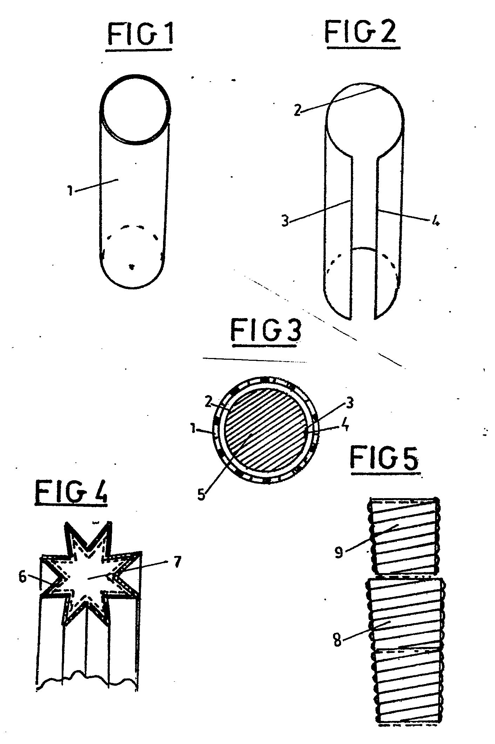

La figure 1 montre l'élément tubulaire; la figure 2 représente, vu en élévation la pellicule enveloppante; la figure 3 montre, vu en coupe transversale l'assemblage de l'enveloppe et de la pellicule; les figures 4, 5 sont des variantes d'exécution, avec tubes en étoile avec paroi hélicoïdale.

L'élément tubulaire 1 est contitué par un cylindre en résine synthétique résistante, destiné à contenir, avec ou sans fond obturé, la terre et le végétal à élever. La garniture interne 2 est une feuille également en résine synthetique souple et peu rigide, dont la texture lui permet d'épouser la forme de la paroi enveloppante. Cette pellicule est formée et soudée sur toute sa hauteur 3, 4. Elle fait corps avec son enveloppe 1 sans y adhérer. L'ensemble est rempli de terreau 5. Cette feuille plastique revêt les parois internes 6 des éléments tubulaires en étoile et plaque contre ces parois pour former la capacité 7. Pour les éléments tubulaires à paroi en forme hélicoïdale 8, ces derniers reçoivent également la garniture interne 9.

La plante en croissant compresse la terre contre les parois de l'élément tubulaire et se moule sur son support sous l'effet de cette pression la masse s'auto-structure. Il s'en suit que lorsqu'on extrait l'ensemble fig. 2, 3, 4 par exemple, l'enveloppe synthétique 9 maintient la motte qui peut être transportée et plantée en terre exactement comme on l'aurait fait avec l'élément tubulaire lui même.

Au cours de la croissance le végétal toujours isolé du sol de transplantation par sa paroi diélectrique et isotherme même fera à un moment donné éclater son enveloppe pour prendre contact avec le sol porteur.

Par cet assemblage les éléments tubulaires couteux seront conservés par l'éleveur ou l'obtenteur, et les enveloppes amovibles légères mais suffisament résistantes pour maintenir le formage pendant le transport et lors de la transplantation rempliront le même office.

La pellicule tubulaire imbriquée dans la masse terreuse et les racines, forme un conditionnement autonome amovible, structure, étanche, diélectrique et imperméable ou perméable ou perforé.

Toutefois les formes, dimensions et dispositions des différents éléments pourront varier dans la limite des équivalents, comme d'ailleurs les matières utilisées pour leur fabrication, sans changer pour cela la conception générale de l'invention telle que revendiquée.

**Revendications**

1. Dispositif d'enveloppe amovible pour culture tubulaire de végétaux comprenant un élément tubulaire, destiné à permettre l'extraction du végétal avec son enracinement et sa motte terreuse, et son conditionnement pour son transport et sa transplantation se caractérisant par le revêtement de la paroi interne de l'élément tubulaire (1) au moyen d'une pellicule (2) ou d'un film en matière synthétique qui épouse la forme de la paroi dudit élément tubulaire, ladite pellicule ou ledit film ne présentant sur toute section perpendiculaire à l'axe de l'élément tubulaire aucune discontinuité, pour réaliser un étui détachable doublant la paroi de l'élément tubulaire.

2. Dispositif suivant le revendication 1 se caractérisant par le fait que la pellicule (2) plaquée contre la paroi est soudée sur toute sa hauteur (3, 4).

3. Dispositif suivant la revendication 1 se caractérisant par le fait que l'étui (1) formé par le film synthétique enrobe le végétal et la masse terreuse (5) en prenant la forme de la paroi de l'élément tubulaire cylindrique lisse (1), profilé en étoile (6) ou avec un filet hélicoïdal (9).

## Patentansprüche

1. Vorrichtung mit herausnehmbarer Umhüllung für Pflanzenzucht im Rohr, mit einem rohrförmigen Element, das das Herausnehmen der Pflanze mit ihren Wurzeln und ihrem Erdballen und das Verpacken der Pflanze für den Transport und das Verpflanzen ermöglichen soll, dadurch gekennzeichnet, dass die Innenwand des rohrförmigen Elements (1) mit einer Haut (2) oder einem Kunststoffilm ausgekleidet ist, die oder der sich an die Wand des genannten rohrförmigen Elements anpasst, und dass die Haut oder der Film in jedem senkrecht zur Achse des rohrförmigen Elements geführten Schnitt keine Unstetigkeit aufweist, so dass eine herausnehmbare Hülse entsteht, die eine Ausfütterung der Wand des rohrförmigen Elements bildet.

2. Vorrichtung nach Anspruch 1, dadurch gekennzeichnet, dass die die Wand auskleidende Haut (2) über ihre gesamte Höhe (3, 4) geschweisst ist.

3. Vorrichtung nach Anspruch 1, dadurch gekennzeichnet, dass die durch den Kunststoffilm gebildete Hülse (1) die Pflanze und den Erdballen (5) umhüllt und dabei die Form der Wand des rohrförmigen Elements annimmt, die als glatter Zylinder (1), mit sternförmigem Umriss (6) oder als schraubenförmiger Gewindegang (9) ausgebildet sein kann.

## Claims

1. A removable envelope device for the tubular cultivation of vegetables, comprising a tubular element for the extraction of the vegetable with its root system and its ball of earth, and for its packaging and its transplantation, characterized by the coating of the inner wall of the tubular element (1) with a pellicle (2) or a film of synthetic material corresponding in shape to that of the wall of said tubular element, said pellicle or said film having no discontinuity on any section perpendicular to the axis of the tubular element in order to from a detachable case definiting the wall of the tubular element.

2. A device according to claim 1, wherein the pellicle (2) applied against the wall is welded over all its height (3, 4).

3. A device according to claim 1, wherein the case (1) formed by the synthetic film encases the vegetable and the eartly mass (5) while assuming the shape of the wall of the smooth cylindrical tubular element (1), profiled as a star (6) or with a helical thread (9).

# FIG 1

# FIG 2

# FIG 3

# FIG 4

# FIG 5